# EUROPEAN PATENT APPLICATION

(11) **EP 0 962 850 A2**
(43) Date of publication of application: **08.12.1999**
(21) Application number: 99660086.2
(22) Date of filing: 24.05.1999
(51) Int. Cl.: G06F 1/00

(54) **A method for protecting embedded system software and embedded system**

(30) Priority: 01.06.1998 FI 981232
(71) Applicant: NOKIA MOBILE PHONES LTD., 02150 Espoo (FI)
(72) Inventor: Valli, Tapio, 20810 Turku (FI)
(74) Representative: Kupiainen, Juhani Kalervo

(57) **Abstract**

The invention pertains to a software protection method that finds particular utility in embedded systems. The protection is based on authentication carried out entirely by means of hardware. A system includes a security circuit integrated on the same microcircuit with a processor. As the system is started, the security circuit reads (404) from the program memory certain portions of the program code and calculates (405) in accordance with a certain algorithm one or more identifiers. Secret code stored in the security circuit is used as operands in the calculation. The identifiers calculated are compared (406) to correct ones and system use is enabled (408) only if the identifiers match. For further protection it is possible to use a program memory circuit which has a component-specific identification code and to check (403) and use as operand (405) said identification code. The security circuit may also be used to decrypt an entirely encrypted program. The method makes the misuse of embedded system software considerably more difficult than in known systems. In addition, compared to software-based authentication, the protection uses less system resources.

## Description

The invention relates to methods defined in the preambles of claims 1 and 2 for protecting embedded system software against misuse. The invention also relates to an embedded system defined in the preamble of claim 6.

In general-purpose computers, software residing in the working memory or disk storage can be read and modified by means of the operating system or simple utility programs. In embedded systems, the software is usually located in a programmable non-volatile memory, and the system lacks a user interface that would allow the software to be manipulated from outside the system in the ways described above. However, an expert using appropriate equipment can read the contents of the memory and even re-program it. Someone may manipulate the program memory in order to obtain information or to cause damage. Therefore it is advantageous to be able to verify the integrity of the software. Good software integrity means that the software is intact and not manipulated in ways other than what is required by the normal continuous operation of the system. Software protection comprises software integrity authentication and an arrangement for authenticating the integrity.

From the prior art it is known software-based methods for the protection of embedded system software. An authentication program is stored in program memory e.g. to calculate identification codes according to a predetermined algorithm using the program code proper and to compare them to known correct codes. If the authentication program detects an error, it prevents the application from starting and possibly generates an alarm. A disadvantage of the method is that a skilled invader may e.g. eliminate the authentication program and then alter the program code or even re-program the authentication procedure such that it will not reveal the alterations made. An additional disadvantage is that a functioning copy of the program can be made in another memory circuit without the authentication procedure preventing it.

From the prior art it is also known partly hardware-based software protection methods that can be applied to embedded systems as well. A system includes e.g. a secret auxiliary circuit into which identification codes have been stored. Identification codes calculated on the basis of the operating program must match with those in the auxiliary circuit. Therefore, altered programs will not work. Likewise, program copies will not work in another environment. A disadvantage of the method is that the calculation and comparison of codes is software-based, so examination of the procedure is possible by monitoring and storing the data traffic on the system bus. An additional disadvantage is that software-based calculation may reserve system resources to a considerable extent if the software to be authenticated is large.

An object of the invention is to reduce said disadvantages of the prior art. The software protection method according to the invention is characterized by what is expressed in the independent claims 1, 2, and 6. Preferred embodiments of the invention are presented in the dependent claims.

The basic idea of the invention is as follows: The integrity of software in an embedded system is verified entirely by hardware. To that end the system includes a security circuit that may be integrated in the same microcircuit with the processor. In addition to the software being protected, also a component-specific program memory circuit identification code is stored in the system's program memory. As the program is started the security circuit reads said identification code from the program memory as well as part of the program code. Then the security circuit computes on the basis of said codes a software identification code, using a predetermined algorithm and a secret code stored in the security circuit. Then the security circuit compares the software identification code thus obtained to the correct identification code. The operating program starts only if the identification codes match. The security circuit may also be arranged so as to decrypt an encrypted operating program during execution.

An advantage of the invention is that misuse of embedded system software is considerably more difficult than in systems using fully or partly software-based protection. This is because hardware-based authentication makes the system more closed; its operation is more difficult to monitor than in known systems. If the contents of the program memory were somehow changed, the result would be a non-functioning program. Likewise, if by some means one would succeed in copying the contents of the program memory into another circuit, the resulting program would not function because of a missing or incorrect memory circuit identification code. Another advantage of the invention is that standard circuits can be used as program memory circuits as long as they have unique identification codes that cannot be altered. Yet another advantage of the invention is that the software integrity calculation does not require that possibly large programs be transferred to the processor and back. A further advantage of the invention is that it can be applied to encrypting the whole application software, which is one way of protecting the software.

The invention will now be described in more detail. In the description, reference will be made to the accompanying drawing wherein
- Fig. 1: shows the general construction of an embedded system and an example of the location of an authentication program according to the prior art,
- Fig. 2: shows an example of software authentication according to the prior art,
- Fig. 3: shows an example of the construction of an embedded system according to the invention,
- Fig. 4: shows an example of software authentication according to the invention, and
- Fig. 5: shows a second example of software authentication according to the invention.

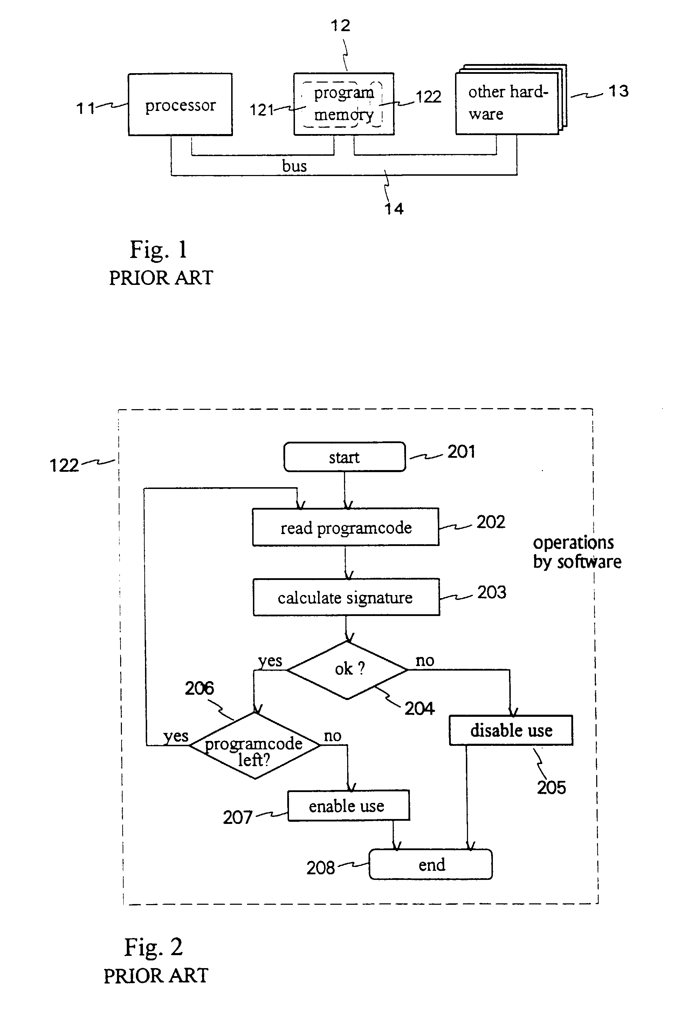

Fig. 1 shows an embedded system in a simple block diagram. It comprises a processor 11, program memory 12, other hardware 13, and a bus 14. Here, a processor means just an execution block for program instructions. The program memory 12 includes the system's operating program 121 and in accordance with the prior art, an authentication program 122. The program memory is usually a separate, advantageously a flash-type memory circuit. The bus 14 connects the elements of the system. It includes the necessary data, address, and control lines.

Fig. 2 shows in the form of a flow diagram an example of the operation of an authentication program 122 according to the prior art. The authentication program is started in block 201. Start-up is initiated at least by turning on the operating voltage of the system. In block 202 the authentication program reads the system's operating program code 121. In block 203 the authentication program calculates according to a certain algorithm an identification code, or signature, on the basis of the program code read, and in block 204 said signature is compared to a known correct signature. If the signatures do not match, the authentication program prevents the system's operating program from starting and, thus, the system from being used (block 205). If the signatures do match, it is checked in accordance with block 206 whether there is still program code left. If there is, operation according to blocks 202-206 is repeated. If all signatures are correct, the authentication program enables the use of the system (block 207). Execution of the authentication program ends in block 208.

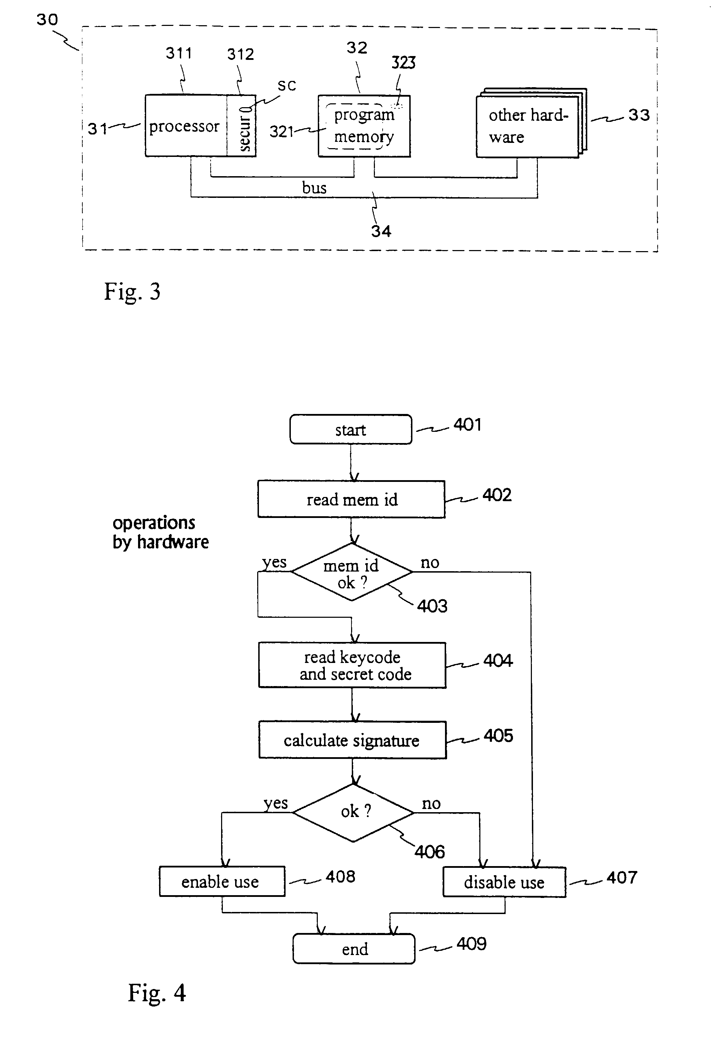

Fig. 3 shows an example of the arrangement according to the invention. It comprises a processor block 31, program memory 32, other hardware 33, and a bus 34, as in the construction shown in Fig. 1. An essential difference from the construction according to Fig. 1 is that the processor block 31 includes, in addition to the processor 311 proper, a security circuit 312 where the hardware-based calculation according to the authentication algorithm is carried out using secret logic. Secret code SC is also stored in the security circuit. The security circuit 312 may be located in a separate microcircuit, but it is advantageous to integrate it in the same circuit with the processor as the operation of the system will then be more difficult to monitor. In addition to the operating program 321, also a component-specific identification code 323 is stored in the program memory 32 to provide enhanced security.

Fig. 4 shows in the form of a flow diagram an example of the operation of the security circuit 312. The operation starts in block 401. Start-up is initiated at least when the system's operating voltage is turned on. The above-mentioned component-specific program memory identification code 323 is read in block 402. In block 403, the identification code 323 is compared to the correct one. If they do not match, the authentication process goes no further, but the use of the system is disabled in accordance with block 407. The identification code is incorrect e.g. if the program memory circuit has been switched into another one that contains a copy or modified version of the system's operating program. If the identification code is correct, a key code and secret code are read in block 404. The key code refers to selected portions of the operating program code or to codes calculated earlier from the operating program code. The key code is read from the program memory through the bus 34. The secret code refers to codes SC used as operands and stored by means of hardware in the security circuit 312. Reading of the code is a transaction internal to the security circuit 312. In block 405, a signature is calculated according to an algorithm. The algorithm may be e.g. of the cyclic redundancy check (CRC) type, in which case the calculation occurs in a shift register connected by means of XOR (exclusive-or) gates. In that case, the secret code comprises the divisor of a division carried out using the modulo-2 principle. The algorithm may also be in accordance with an encryption method using a public key, such as RSA (Rivest-Shamir-Adleman) or DES (Data Encryption Standard). In these cases, the secret code comprises the secret keys required by said methods. The program memory identification code 323 may be used as an additional operand in the calculation in block 405. In block 406 the signature returned by the calculation is compared to the correct signature. If the signature calculated is incorrect, use of the system is disabled in accordance with block 407. The signature is incorrect e.g. if the operating program has been modified. If the signature calculated is correct, the security circuit 312 enables system use (block 408) and ends the authentication process (block 409).

In the example depicted in Fig. 4, only one program signature is calculated. Naturally, the authentication may also be performed in several stages, as in Fig. 2, thus producing a plurality of consecutive signatures.

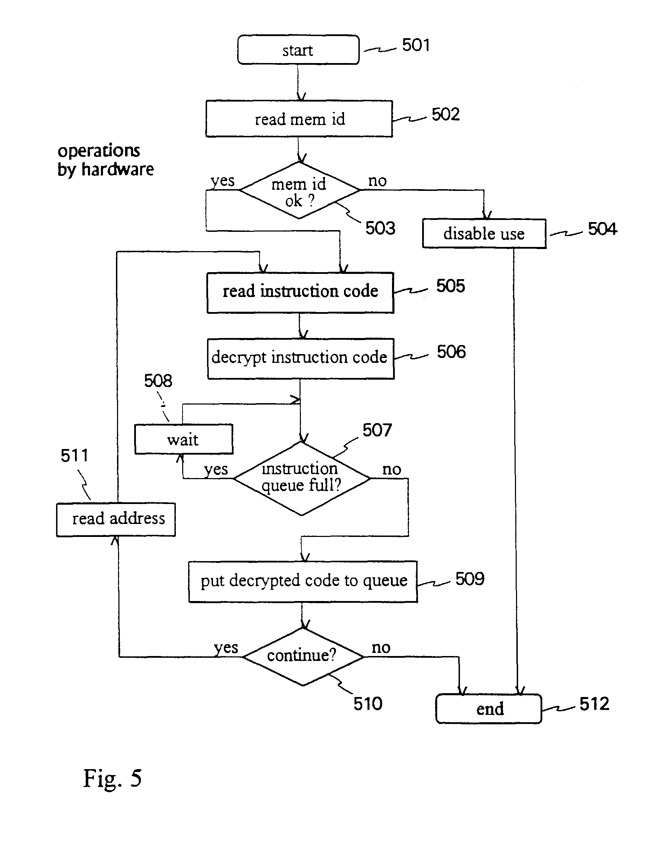

Fig. 5 shows in the form of a flow diagram a second example of the operation of the security circuit 312 according to the invention. In this example, the operating program is in the program memory in a fully or partly encrypted form. The encryption is carried out in accordance with the prior art. Operation of blocks 501-503 is identical with that of blocks 401-403 in the previous example. The memory circuit identification code check according to those blocks may also be left out. In block 505 the security circuit reads from the program memory one or more encrypted program instructions starting from a certain address. In block 506 the instruction code or codes are decrypted by hardware into executable form in accordance with the encryption method used. Secret code stored in the security circuit is used as operands in the decryption. In block 507 the security circuit checks whether the processor's registers, where instruction codes are collected in queues, have room for new instruction codes. If not, i.e. the registers are full, the process waits in accordance with block 508. When room becomes available, a new instruction code is placed in the execution queue in the register in accordance with block 509. Then, in block 510, the security circuit checks whether decryption of program code continues. The information comes from the processor. If decryption continues, the security circuit reads the address provided by the processor (block 511). The next instruction is fetched from that address and operation continues in accordance with blocks 505-510. When the processor informs that program execution ends, the security circuit naturally ends active operation (block 512) and remains waiting for a new start-up.

In applications according to Fig. 5 it is particularly advantageous to integrate the security circuit in the same microcircuit with the processor. In that case all the code transferred through the system main bus 34, the communications of which can be monitored by means of suitable equipment, is encrypted. Plain code is only found inside the processor circuit.

Above it was described solutions according to the invention. Details of operation may vary to a large extent, depending on the architecture of the embedded system and its processor as well as on the authentication algorithm used. The inventional idea can be applied in different ways within the scope defined by the claims.

## Claims

1. A method for protecting an operating program in an embedded system, wherein it is calculated on the basis of the operating program code located in the program memory at least one identifier in accordance with a certain algorithm using secret code as operands, and the identifier obtained is compared to a correct identifier, **characterized** in that said secret code is stored in hardware and said identifier calculation and comparison (404-406) are carried out substantially entirely by means of hardware.

2. A method for protecting an operating program in an embedded system, wherein the system's operating program code is at least partly encrypted, **characterized** in that while the program is being executed, the decryption (505-511) of said encryption is carried out substantially entirely by means of hardware.

3. The method of claim 1 or 2 wherein a program memory circuit is given a component-specific identification code (323), **characterized** in that the component-specific identification code is also used in the protection of said operating program.

4. The method of claim 1, **characterized** in that said identifier is calculated using a CRC-based method.

5. The method of claim 1, **characterized** in that said identifier is calculated using a public key based encryption method.

6. An embedded system (30) comprising a program memory (32) and processor (311) and being arranged so as to protect an operating program in the program memory by means of an algorithm, **characterized** in that said system (30) also comprises a security circuit (312) which contains secret logic and where secret code (SC) has been stored, said security circuit being arranged so as to perform, in hardware, calculations according to said algorithm.

7. The embedded system of claim 6 wherein the program memory (32) is given a component-specific identification code (323), **characterized** in that it is arranged so as to use said identification code also in the protection of the system's operating program.

8. The embedded system of claim 6, **characterized** in that said algorithm comprises an identifier calculation method based on at least the operating program code (321) and secret code (SC) stored in said security circuit.

9. The embedded system of claim 6, **characterized** in that said algorithm comprises a method for decrypting encrypted program code (321) into executable program code.

10. The embedded system of claim 6, **characterized** in that said security circuit (312) and said processor (311) are located in one and the same integrated circuit.

11. The embedded system of claim 6, **characterized** in that it is a mobile communications device.
